# EUROPÄISCHE PATENTSCHRIFT

(11) **EP 3 080 461 B1**
(45) Veröffentlichungstag und Bekanntmachung des Hinweises auf die Patenterteilung: **12.12.2018**
(21) Anmeldenummer: 14803045.5
(22) Anmeldetag: 18.11.2014
(51) Int. Cl.: F15B 1/027

(54) **VENTILVORRICHTUNG**
VALVE ASSEMBLY
VALVE

(30) Priorität: 13.12.2013 DE 102013020585
(43) Veröffentlichungstag der Anmeldung: 19.10.2016
(73) Patentinhaber: Hydac Fluidtechnik GmbH, 66280 Sulzbach/Saar (DE)
(72) Erfinder: SCHULZ, Frank, 66440 Blieskastel-Bierbach (DE); REIK, Michael, 66121 Saarbrücken (DE); HILZENDEGEN, Philipp, 66687 Wadern (DE)
(74) Vertreter: Bartels und Partner, Patentanwälte
(86) Internationale Anmeldenummer: PCT/EP2014/003070
(87) Internationale Veröffentlichungsnummer: WO 2015/086107

(56) Entgegenhaltungen:
- EP-A1- 1 653 132
- EP-A1- 1 705 411
- EP-A2- 2 048 372
- DE-A1- 2 213 244
- FR-A1- 2 201 420

## Beschreibung

Die Erfindung betrifft eine Ventilvorrichtung, insbesondere ein entsperrbares Doppelrückschlagventil, mit den Merkmalen im Oberbegriff von Anspruch 1.

Ventilvorrichtungen dieser Gattung sind Stand der Technik. Derartige Ventilvorrichtungen werden als Wechselventile bei hydraulischen und bei pneumatischen Schaltungen eingesetzt, bei denen eine logische ODER-Verknüpfung von Drucksignalen erforderlich ist. Wechselventile weisen am Ventilgehäuse zwei Eingangsanschlüsse und einen Ausgangsanschluss auf. Das Wechselventil besitzt zwei definierte Schaltstellungen. In jeder Schaltstellung wird immer ein Eingangsanschluss vom zugeordneten Ventilelement gesperrt und der andere Eingangsanschluss wird freigegeben, so dass vom freigegebenen Fluidanschluss Fluid zum Ausgangsanschluss gelangen kann. Werden beide Fluideingänge mit Druck beaufschlagt, dann gibt bei einem in Standardbauweise ausgeführten Wechselventil das jeweilige Ventilelement den den höheren Druck führenden Eingangsanschluss frei, während der andere Eingangsanschluss mit geringerem Druckniveau gesperrt ist. Bei anderer Bauweise, als inverses Wechselventil, sperrt das jeweilige Ventilelement den den höheren Druck führenden Eingangsanschluss, während der den niedrigeren Druck führende Fluidanschluss zum Ausgangsanschluss hin geöffnet ist.

Bei einem als Doppelrückschlagventil ausgebildeten Wechselventil, das zwei Ventilelemente aufweist, die jedes einem einen Eingangsanschluss bildenden Fluidanschluss 1 und Fluidanschluss 2 zugeordnet sind, ist eine Steuereinrichtung in Form eines Verbindungselements zwischen den Ventilelementen vorhanden, die die Ventilelemente bei ihren Bewegungen zwischen Entsperr- und Schließstellungen miteinander koppelt. Die Ventilelemente sind beim Stand der Technik durch Schaltkugeln gebildet, so dass jedes Rückschlagventil durch ein Kugelventil gebildet ist.

Die EP 1 653 132 A1 offenbart eine Ventilvorrichtung mit mindestens drei an einem Ventilgehäuse vorgesehenen Fluidanschlüssen; mindestens zwei im Ventilgehäuse verfahrbaren Ventilelementen sowie mit mindestens einer Steuereinrichtung zum Ansteuern der jeweiligen Ventilelemente, wobei mindestens eines der Ventilelemente mit Teilen des Ventilgehäuses ein sitzdichtes Verschlussteil für die zugeordneten Fluidanschlüsse ausbildet, wobei die Ventilelemente in Form von Kegelkolben mit einer kegelförmigen Dichtfläche vorgesehen sind, die in Zusammenwirkung mit einer zugeordneten Dichtkante des Ventilgehäuses einen sitzdichten Verschluss bildet, und wobei die Kegelkolben jeweils durch einen Energiespeicher in eine Schließstellung vorgespannt sind, in der der erste Kegelkolben einen ihm zugeordneten ersten Fluidanschluss und der zweite Kegelkolben einen ihm zugeordneten zweiten Fluidanschluss gegen einen dritten Fluidanschluss jeweils leckagefrei abdichten, der an beide Dichtkanten angrenzt.

Weitere Ventilvorrichtungen gehen aus der FR 2 201 420 A1, der DE 2 213 244 und der EP 2 048 372 A2 hervor.

Ausgehend von diesem Stand der Technik stellt sich die Erfindung die Aufgabe, eine Ventilanordnung der besagten Gattung zur Verfügung zu stellen, die sich durch ein besonders günstiges Betriebsverhalten auszeichnet.

Erfindungsgemäß ist diese Aufgabe durch eine Ventilvorrichtung gelöst, die die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass das stangenartige Steuerglied einander entgegengesetzte wirksame Kolbenflächen besitzt, von denen die eine mit dem Druck des ersten Fluidanschlusses und die zweite mit dem Druck des zweiten Fluidanschlusses beaufschlagbar ist.

Die Schaltbewegungen der als Ventilelemente dienenden Kegelkolben sind somit nicht durch unmittelbare Druckbetätigung vom zugehörigen Fluidanschluss her bewirkt, sondern aufgrund mechanischer Steuerung mittels des stangenartigen Steuerelements, das durch Druckbeaufschlagung seiner Kolbenflächen bewegt wird. Dadurch eröffnet sich die vorteilhafte Möglichkeit, für die Schaltbewegungen jedes Kegelkolbens eine unabhängige, jeweils optimal abgestimmte Dämpfung vorzusehen, indem in den Verbindungsleitungen, die zu den Kolbenflächen des stangenartigen Steuerglieds führen, unterschiedliche Drosselstellungen ausgebildet sind. Somit lässt sich bei den Schaltvorgängen für jeden Kegelkolben eine unabhängige, individuelle Dämpfung realisieren.

Die Ventilelemente sind in Form von Kegelkolben mit einer kegelförmigen Dichtfläche vorgesehen, die in Zusammenwirkung mit einer zugeordneten Dichtkante des Ventilgehäuses einen sitzdichten Verschluss bildet. Durch die Gestaltung in der Art von Ventilkegeln ist ein vollständig leckagefreier Verschluss realisierbar.

Es ist ferner vorgesehen, dass mindestens eines der Ventilelemente mit Teilen des Ventilgehäuses ein sitzdichtes Verschlussteil für die zugeordnete Fluidanschlussstelle ausbildet. Der Ersatz der Schaltkugel eines üblichen Kugelventils durch ein mit zugeordneten Gehäuseteilen zusammenwirkendes, sitzdichtes Verschlussteil, vermeidet die beim Stand der Technik auftretenden damit in Verbindung stehenden Probleme. Die Ausbildung des jeweiligen Ventilelements durch ein sitzdichtes Verschlussteil ermöglicht die Realisierung eines Wechselventils, bei dem in der unbetätigten Schaltstellung sämtliche Anschlüsse leckagefrei sind, insbesondere ist eine positiv überdeckte Ventilanordnung realisierbar.

Bei besonders vorteilhaften Ausführungsbeispielen ist im Unterschied zum Stand der Technik, bei dem die Ventilelemente des Doppelrückschlagventils durch ein Verbindungsglied der Steuereinrichtung bei ihren Bewegungen miteinander gekoppelt sind, die Steuereinrichtung derart ausgebildet, dass sie eine voneinander unabhängig erfolgende Ansteuerung der Ventilelemente ermöglicht. Dadurch ist der schwerwiegende Nachteil der üblichen Ventilanordnungen vermieden, dass bei einem jeweiligen Entsperrprozess kurzzeitig alle drei Anschlüsse miteinander verbunden sind. Dies bedeutet, dass beim Stand der Technik in der Phase zwischen Öffnungsvorgang eines Ventilelements und dem Schließvorgang des anderen Ventilelements ein Fluidkurzschluss generiert wird. Bei unabhängig voneinander erfolgender Ansteuerung der Ventilelemente lässt sich der Umschaltvorgang derart gestalten, dass das Ventilelement, das dem zu öffnenden Fluidanschluss zugeordnet ist, seine Öffnungsbewegung unabhängig vom in der Schließstellung verbleibenden, anderen Ventilelement ausführt.

In vorteilhafter Ausgestaltung kann die Steuereinrichtung ein im Ventilgehäuse entlang der Verfahrrichtung der Ventilelemente verschiebbares, stangenartiges Steuerelement aufweisen, bei dessen Verschiebung in der einen oder anderen Verfahrrichtung das eine oder das andere Ventilelement, unabhängig vom jeweils anderen Ventilelement, mitnehmbar ist.

Wenn die Ventilvorrichtung als Standard-Wechselventil ausgebildet ist, sind die wirksamen Kolbenflächen des stangenartigen Steuergliedes derart mit dem Fluidanschluss 1 bzw. dem Fluidanschluss 2 verbunden, dass das Steuerglied durch den Druck des den jeweils höheren Druck führenden Fluidanschlusses in eine Richtung bewegt wird, in der es den dem Fluidanschluss höheren Druckes zugehörigen Kegelkolben aus der Schließstellung bewegt und den dem Fluidanschluss des niedrigeren Druckes zugehörigen Kegelkolben in der Schließstellung belässt. In entsprechender Weise kann die Anordnung bei Ausbildung als inverses Regelventil derart getroffen sein, dass die wirksamen Kolbenflächen des stangenartigen Steuergliedes derart mit den Fluidanschlüssen verbunden sind, dass das stangenartige Steuerglied durch den Druck des den jeweils höheren Druck führenden Fluidanschlusses in eine Richtung bewegt wird, in der es den dem Fluidanschluss des niedrigeren Druckes zugehörigen Kegelkolben aus der Schließstellung bewegt und den dem Fluidanschluss des höheren Drucks zugehörigen Kegelkolben in der Schließstellung belässt.

Bei besonders vorteilhaften Ausführungsbeispielen weist das Steuerglied die Form einer runden Stange auf, die beide Kegelkolben koaxial durchgreift, wobei von den endseitigen Kolbenflächen ausgehende, entlang der Verfahrachse verlaufende Bohrungen in der Stange Kanäle für die Fluidverbindung der Kolbenflächen mit dem jeweils zugehörigen Fluidanschluss 1 oder 2 bilden. Dadurch ergibt sich der besondere Vorteil, dass durch den Austausch der als Steuerglied dienenden Stange eine ansonsten baugleiche Ventilvorrichtung als Standard-Wechselventil oder als inverses Wechselventil ausgebildet werden kann, indem Stangen mit unterschiedlichen Bohrungen vorgesehen sind, die einen entsprechenden Kanalverlauf für die Verbindung der Kolbenflächen mit dem gewünschten Fluidanschluss bilden.

Um die gewünschte Entkopplung der Öffnungs- und Schließbewegungen der Kegelkolben auf einfache Weise zu realisieren, kann für die Mitnahme der Kegelkolben durch das stangenartige Steuerglied ein vorgegebener Leerhub des Steuergliedes vorgesehen sein.

Für eine Anpassung des Schaltverhaltens an anwendungsspezifische Anforderungen können die wirksamen Kolbenflächen des stangenartigen Steuerglieds unterschiedlich große wirksame Kolbenflächen besitzen. Weiterhin kann die Anordnung mit Vorteil so getroffen sein, dass jeder Kegelkolben eine Kolbenfläche aufweist, die bei Beaufschlagung mit dem Druck des jeweils zugehörigen Fluidanschlusses die am Kegelkolben wirkende Federkraft verstärkt. Der leckagefreie sitzdichte Verschluss wird durch die entsprechend erhöhte Dichtkraft begünstigt. Bei vorteilhafter Gestaltung der Kegelform der Kegelkolben unterhalb des Sitzes lässt sich das Öffnungsverhalten über den Hub positiv beeinflussen, z.B. im Sinne eines gedämpften Öffnens.

Mit dem erfindungsgemäßen Ventilkonzept ist nicht nur die beschriebene Sitzdichtheit gewährleistet, sondern gleichzeitig ein positiv überdecktes Ventilkonzept realisiert, d. h. während des Schaltens des Ventils nebst zugehöriger Ventilelemente besteht keine Fluidverbindung zwischen mindestens zwei der mindestens drei eingesetzten Fluidanschlüsse des Ventilgehäuses. Aufgrund der positiven Überdeckung lassen sich die genannten Anschlüsse unabhängig voneinander schalten und wie vorstehend beschrieben entsprechend bedämpfen. Durch die angesprochene Sitzdichtheit ergibt sich darüber hinaus eine verbesserte Energieeffizienz im Betrieb der Ventilvorrichtung. Als besonders vorteilhaft hat es sich erwiesen, die erfindungsgemäße Lösung für ein invers arbeitendes Ventil im vorstehend beschriebenen Sinne einzusetzen.

Nachstehend ist die Erfindung anhand von in der Zeichnung dargestellten Ausführungsbeispielen im Einzelnen erläutert. Es zeigen:
- Fig. 1: in Symboldarstellung die hydraulische Schaltung eines Anwendungsbeispiels für Wechselventile;
- Fig. 2: einen gegenüber einer praktischen Ausführungsform ver-größert und schematisch vereinfacht gezeichneten Längsschnitt eines Ausführungsbeispiels der erfindungsgemäßen Ventilvorrichtung in Form eines ein inverses Wechselventil bildenden Doppelrückschlagventils;
- Fig. 3: einen der Figur 2 entsprechenden Längsschnitt eines alternativen Ausführungsbeispieles der Erfindung in Form eines Standard-Wechselventils; und
- Fig. 4 und 5: entsprechende Längsschnitte zweier weiterer Ausführungsbeispiele der Erfindung in Form inverser Wechselventile.

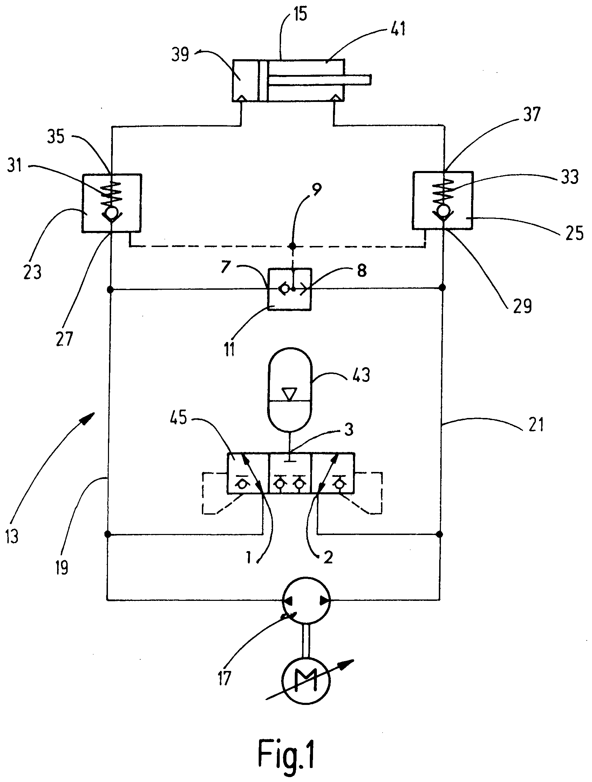

Von der Vielzahl möglicher Anwendungen für Wechselventile zeigt Figur 1 beispielhaft die Benutzung eines Standard-Wechselventils 11 in einem geschlossenen Hydraulikkreis 13 zur Steuerung eines Arbeitszylinders 15. Der Hydraulikkreis 13 weist eine elektromotorisch antreibbare Hydropumpe 17 auf, die je nach Antriebsdrehrichtung in einer ersten Leitung 19 oder einer zweiten Leitung 21 hydraulischen Druck aufbaut. Von den drei Fluidanschlüssen des Wechselventils 11 sind ein Fluidanschluss 7 als Eingangsanschluss mit der Leitung 19 und ein Fluidanschluss 8 als zweiter Eingangsanschluss mit der Leitung 21 verbunden. Der Fluidanschluss 9 ist als Ausgangsanschluss sowohl mit einem aufsteuerbaren Rückschlagventil 23 als auch mit einem aufsteuerbaren Rückschlagventil 25 in Verbindung. Die Rückschlagventile 23, 25 weisen jeweils einen Eingangsanschluss 27 bzw. 29 auf, die mit der Leitung 19 bzw. der Leitung 21 verbunden sind. Der jeweilige Eingangsanschluss 27, 29 ist gegen die Schließkraft jeweils einer Feder 31 bzw. 33 durch das Drucksignal am Fluidanschluss 3 des Wechselventils 11 entsperrbar, um einen Ausgangsanschluss 35 bzw. 37 der Rückschlagventile 23, 25 mit dem Kolbenraum 39 oder dem Stangenraum 41 des Arbeitszylinders 15 zu verbinden. Bei dieser Anordnung sind beide den Arbeitszylinder 15 versorgende Rückschlagventile 23 und 25 vom Fluidanschluss 9 des Wechselventils 11 her entsperrbar, ungeachtet dessen, welche der Leitungen 19 oder 21 in Abhängigkeit von der Drehrichtung der Pumpe 17 die Druckleitung oder Rückleitung bildet, so dass durch Wahl des Antriebs der Pumpe 17 die Tätigkeit des Arbeitszylinders 15 steuerbar ist. In der bei derartigen Hydraulikschaltungen üblichen Weise ist zwischen den Leitungen 19 und 21 eine einen Hydrospeicher 43 und ein Wegeventil 45 aufweisende Druckhalte- und Energierückgewinnungseinheit eingefügt. Bei dem Wegeventil 45 handelt es sich um ein inverses Wechselventil mit geschlossener Mittelstellung. Dessen erster Eingangsanschluss 1 und dessen zweiter Eingangsanschluss 2 sind mit der Leitung 19 bzw. mit der Leitung 21 verbunden. Der Ausgangsanschluss 3 ist mit dem Hydrospeicher 43 in Verbindung.

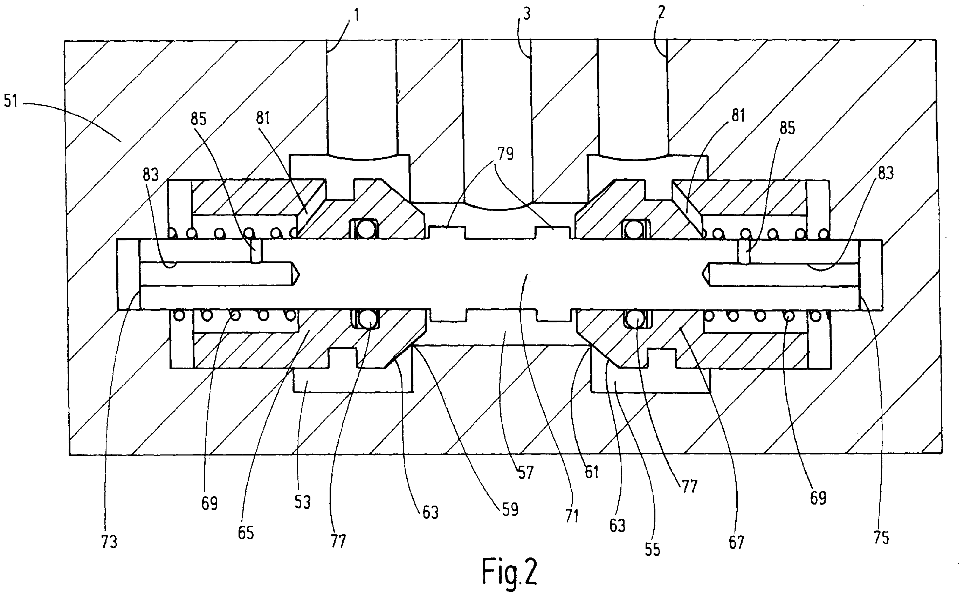

Die Fig. 2 zeigt ein erstes Ausführungsbeispiel der erfindungsgemäßen Ventilvorrichtung in Form eines Doppelrückschlagventiles, das ein inverses Wechselventil bildet. Das zugehörige Ventilgehäuse 51 weist einen inneren Arbeitsraum auf, der sich in Form einer gestuften Bohrung entlang einer Betätigungs-Verfahrachse erstreckt. Durch die gebildeten Stufen ist der Arbeitsraum in Abschnitte unterschiedlichen Durchmessers unterteilt, von denen ein vom Zentralbereich nach links versetzter Fluidraum 53 mit dem Fluidanschluss 1 als Eingangsanschluss des Gehäuses 51 in Verbindung ist. Ein vom Zentralbereich nach rechts versetzter Fluidraum 55 ist mit dem Fluidanschluss 2 als zweitem Eingangsanschluss des Gehäuses 51 in Verbindung, und ein dazwischenliegender dritter Fluidraum 57 ist mit dem Fluidanschluss 3 als dem Ausgangsanschluss des Gehäuses 51 in Verbindung. Der mittlere Fluidraum 57 hat einen gegenüber den anderen Fluidräumen 53, 55 geringeren Durchmesser. Die dadurch am Übergang zum jeweils angrenzenden Fluidraum 53 und 55 befindliche Stufe des Ventilgehäuses 51, bildet jeweils eine Dichtkante 59 und 61 zur Bildung eines sitzdichten Verschlusses in Zusammenwirkung mit einer Kegelfläche 63, die als Dichtfläche an je einem zugehörigen Kegelkolben ausgebildet ist. Vor diesen sind ein erster Kegelkolben mit 65 bezeichnet, der dem mit dem Fluidanschluss 1 verbundenem ersten Fluidraum 53 zugeordnet ist, und ein zweiter Kegelkolben mit 67 bezeichnet, der dem Fluidraum 55 zugeordnet ist, der mit dem Fluidanschluss 2 in Verbindung ist. Bei dem in Fig. 2 gezeigten, unbetätigten Zustand bildet der linksseitige Kegelkolben 65 in Zusammenwirkung mit der Dichtkante 59 ein sitzdichtes Verschlussteil, während der rechtsseitig liegende Kegelkolben 67 in Zusammenwirkung mit der Dichtkante 61 ein sitzdichtes Verschlussteil bildet. Bei diesem Zustand sind sämtliche Fluidanschlüsse 1, 2 und 3 gesperrt.

Die die Ventilelemente eines Doppelrückschlagventiles bildenden Kegelkolben 65, 67 sind durch je eine Druckfeder 69, die sich an der der Kegelfläche 63 entgegengesetzten Fläche der Kegelkolben 65, 67 abstützen, in die in Fig. 2 gezeigte Schließstellung vorgespannt. Für Bewegungen der Kegelkolben 65, 67 aus der Schließstellung aufgrund von Drucksignalen am Fluidanschluss 1 oder Fluidanschluss 2 ist eine Steuereinrichtung mit einem entlang der Verfahrachse bewegbaren Steuerglied vorgesehen. Dieses ist durch eine runde Stange 71 gebildet, die im Gehäuse 51 verfahrbar geführt ist, und endseits je eine von Fluid beaufschlagbare Kolbenfläche 73 und 75 aufweist. Die Stange 71 durchgreift die Kegelkolben 65, 67 koaxial, wobei diese eine Relativbewegung der Stange 71 zulassende innere Führung bilden, die bei jedem Kegelkolben 65, 67 durch je ein Dichtelement 77 abgedichtet ist. Zwischen den Kolben 65, 67 weist die Stange 71 eine Mitnehmereinrichtung auf, gebildet durch zwei radiale Vorsprünge 79, von denen sich je einer in der Nähe eines benachbarten Kegelkolbens 65, 67 befindet. Bei Bewegungen der Stange 71 in der einen oder anderen Verfahrrichtung wird der eine oder der andere Kegelkolben 65 oder 67 nach Ablauf eines geringen Leerhubes, der von der Größe des Abstands der Vorsprünge 79 vom benachbarten Kegelkolben 65, 67 bestimmt ist, mitgenommen und gegen die Wirkung der jeweils zugeordneten Druckfeder 69 von der Dichtkante 59 oder 61 abgehoben, um den Fluidanschluss 1 oder den Fluidanschluss 2 mit dem Fluidanschluss 3 als Ausgangsanschluss zu verbinden.

Wie bereits erwähnt, ist das Beispiel der Fig. 2 als inverses Wechselventil ausgelegt und dies bedeutet, dass bei einem Drucksignal am Fluidanschluss 1 dessen Verbindung mit dem Fluidanschluss 3 durch Anlage der Kegelfläche 63 des Kegelkolbens 65 an der Dichtkante 59 gesperrt ist, während die Kegelfläche 63 des anderen Kegelkolbens 57 von der Dichtkante 61 abgehoben ist, um den Fluidanschluss 2 mit dem Fluidanschluss 3 zu verbinden. Diese Öffnungsbewegung des Kegelkolbens 67 erfolgt durch eine Verfahrbewegung der Stange 71, bei der der als Mitnehmer dienende, zugeordnete Vorsprung 79 am Kegelkolben 67 anläuft und diesen gegen die Kraft der Druckfeder 69 in Fig. 2 nach rechts verschiebt. Diese Bewegung der Stange 61 erfolgt durch Druckbeaufschlagung der Kolbenfläche 73 mit dem Druck des Fluidanschlusses 1. Hierfür ist im Kegelkolben 65, vom Fluidraum 53 ausgehend, eine Schrägbohrung 81 ausgebildet, die zu dem die Druckfeder 69 umgebenden Raum führt. Als weitere Verbindungskanäle zur Kolbenfläche 73 sind in der Stange 71, von deren Ende ausgehend, eine entlang der Verfahrachse verlaufende Bohrung 83 mit einer Querbohrung 85 ausgebildet.

Für den umgekehrten Schaltvorgang, bei dem das höhere Drucksignal am Fluidanschluss 2 ansteht, weist der andere Kegelkolben 67 ebenfalls eine Schrägbohrung 81 auf, um die am rechtsseitigen Ende der Stange 71 befindliche Kolbenfläche 75 über eine Längsbohrung 83 und eine Querbohrung 85 der Stange 71 mit dem Druck des Fluidanschlusses 2 zu versorgen. Dementsprechend bewegt sich die Stange 71 in Fig. 2 nach links für eine entsprechende Mitnahme des Kegelkolbens 65 aus der Schließstellung, so dass der Fluidanschluss 1 entsperrt ist. Bei den jeweiligen Schaltvorgängen bleibt der von den Verfahrbewegungen der Stange 71 nicht mitgenommene Kegelkolben 65 oder 67 in der Schließstellung.

Für eine unabhängige Bedämpfung der Schaltvorgänge für jede Ventilseite, das heißt für die Bewegungen des Kegelkolbens 65 und des Kegelkolbens 67, können in den jeweils zugeordneten Schrägbohrungen 81 sowie den Querbohrungen 85 der Stange 71 Drosselstellen durch Blenden eingesetzt sein, die in der Zeichnung nicht dargestellt sind.

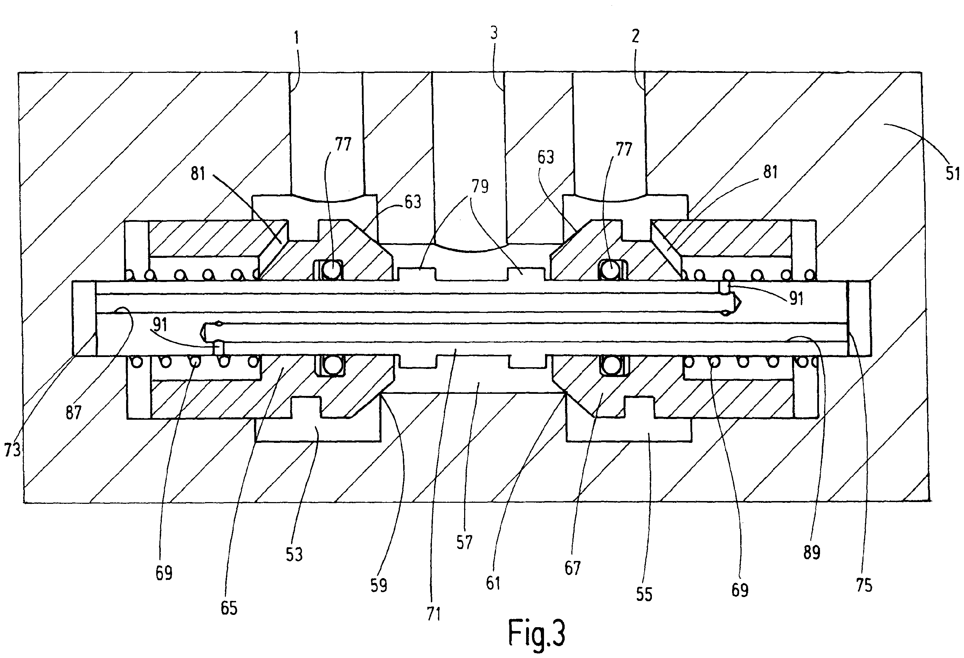

Das in Fig. 3 gezeigte weitere Ausführungsbeispiel, das als Standard-Wechselventil ausgelegt ist, unterscheidet sich vom Beispiel von Fig. 2 lediglich durch eine andersartige Ausbildung der in der Stange 71 verlaufenden Kanäle zur Verbindung der Kolbenflächen 73 und 75 mit den Fluidanschlüssen 1 und 2. Hierfür weist die Stange 71 von jeder Kolbenfläche 73 und 75 ausgehend jeweils eine Längsbohrung 87 und 89 auf, die zueinander parallel verlaufen, und von denen die Längsbohrung 87 die Kolbenfläche 73 über eine Querbohrung 91 mit dem die Feder 69 umgebenden Raum des Kegelkolbens 67 verbindet, während die andere Längsbohrung 89 die Kolbenfläche 75 über eine Querbohrung 91 mit dem die Feder 69 umgebenden Raum des Kegelkolbens 65 verbindet. Abgesehen vom gegenüber Fig. 2 invertierten Schaltverhalten entspricht die Funktionsweise dem Beispiel von Fig. 2, wobei ebenfalls in den Schrägbohrungen 81 Drosselstellen ausgebildet sein können. Für einen Wechsel des Betriebsverhaltens (standard/ invers) genügt, bei ansonsten gleicher Ventilbauweise, der Austausch der die jeweils erforderlichen Bohrungen aufweisenden Stange 71.

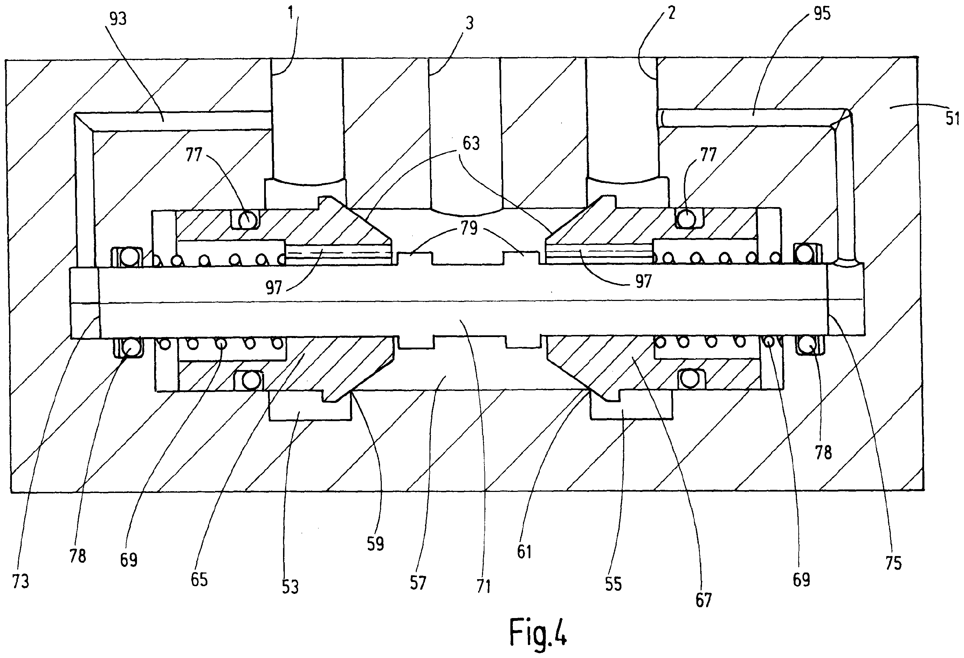

Das Ausführungsbeispiel von Fig. 4 ist, wie auch das Beispiel von Fig. 2, als inverses Wechselventil ausgelegt, wobei der Unterschied gegenüber Fig. 2 jedoch darin besteht, dass die Verbindungen der Kolbenflächen 73 und 75 der Stange 71 mit den Fluidanschlüssen 1 bzw. 2 nicht über Bohrungen der Stange 71 gebildet sind, sondern durch im Ventilgehäuse 51 geführte Verbindungsleitungen 93 und 95, die vom Fluidanschluss 1 bzw. vom Fluidanschluss 2 ausgehen. Dadurch werden die Seiten der Kegelkolben 65, 67, an die die jeweilige Druckfeder 69 angrenzt, nicht als steuerdruckführende Druckräume benötigt, wodurch sich die Möglichkeit ergibt, für die Kegelkolben 65, 67 einen Druckausgleich vorzusehen. Zu diesem Zweck ist in jedem Kegelkolben 65, 67 ein durchgehender Längskanal 97 gebildet. Anders als bei den Beispielen von Fig. 2 und 3 erfolgt die Abdichtung nicht durch Dichtelemente 77 zwischen Kegelkolben 65, 67 und Gehäuse 51, sondern mittels Dichtelementen 78 zwischen der Stange 71 und dem Gehäuse 51. Bei Wegfall von Schrägbohrungen 81 in den Kegelkolben 65, 67 kann eine Drosselung durch eine Blende in der Leitung 93 und/oder 95 vorgesehen sein.

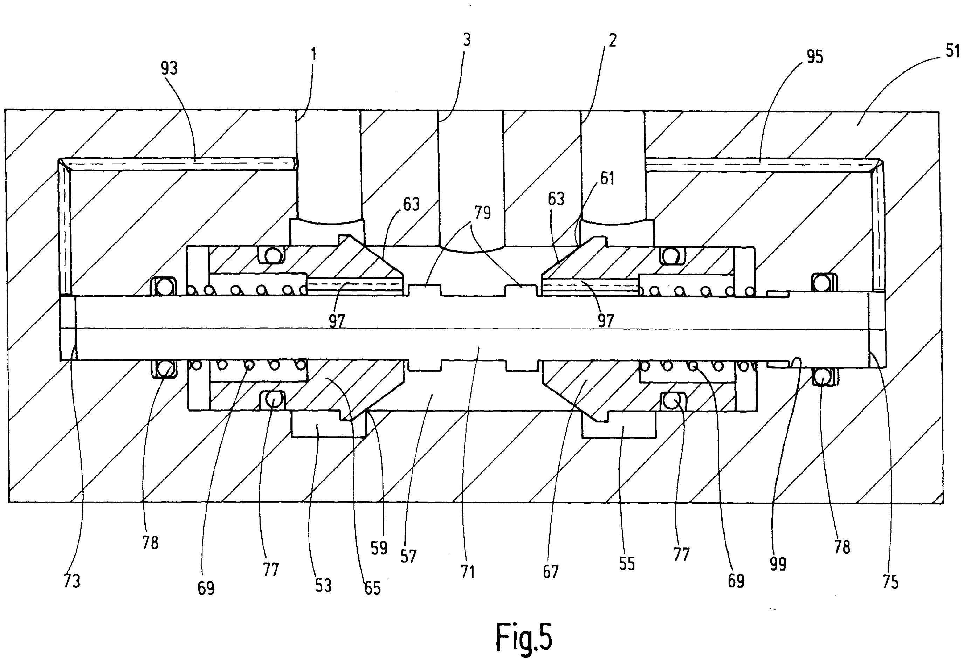

Das Ausführungsbeispiel von Fig. 5 entspricht dem Ausführungsbeispiel von Fig. 4, abgesehen davon, dass an der Stange 71 an einem in der Zeichnung rechtsseitig gelegenen Endteil ein Stangenabschnitt 99 mit vergrößertem Durchmesser vorgesehen ist. Somit hat beim Ausführungsbeispiel von Fig. 5 die Kolbenfläche 75 eine größere Wirkfläche als die Kolbenfläche 73 des anderen Endes. Dadurch lässt sich nach Wahl der Größen der Kolbenflächen 73, 75 das Schaltverhalten an jeweilige anwendungsspezifische Anforderungen anpassen.

In der schematisch vereinfachten Darstellung der Figuren 2 bis 5 sind vom Ventilgehäuse 51 lediglich die mit den Kegelkolben 65, 67 funktionsmäßig zusammenwirkenden Einzelheiten wie die Lage der Fluidanschlüsse 1, 2, 3 und der zugeordneten Kanten 59, 61 näher dargestellt. Da die übrige konstruktive Gestaltung des Gehäuses 51 dem Stand der Technik entsprechen kann, sind der Übersichtlichkeit halber diesbezügliche Details weggelassen. Es versteht sich, dass für den Einbau der bewegbaren Funktionsteile das Gehäuse 51 mehrteilig ausgebildet sein kann, das in der vereinfachten Darstellung als einteilig gezeigt ist.

## Patentansprüche

1. Ventilvorrichtung, insbesondere entsperrbares Doppelrückschlagventil, vorzugsweise in der Art eines Wechselventils, mit
- mindestens drei an einem Ventilgehäuse (51) vorgesehenen Fluidanschlüssen (1, 2, 3);
- mindestens zwei im Ventilgehäuse (51) verfahrbaren Ventilelementen (65, 67) sowie mit
- mindestens einer Steuereinrichtung (71) zum Ansteuern der jeweiligen Ventilelemente (65, 67),
wobei mindestens eines der Ventilelemente (65, 67) mit Teilen (59/61) des Ventilgehäuses (51) ein sitzdichtes Verschlussteil für die zugeordneten Fluidanschlüsse (1, 2, 3) ausbildet, wobei die Ventilelemente in Form von Kegelkolben (65, 67) mit einer kegelförmigen Dichtfläche (63) vorgesehen sind, die in Zusammenwirkung mit einer zugeordneten Dichtkante (59, 61) des Ventilgehäuses (51) einen sitzdichten Verschluss bildet, und wobei die Kegelkolben (65, 67) jeweils durch einen Energiespeicher (69) in eine Schließstellung vorgespannt sind, in der der erste Kegelkolben (65) einen ihm zugeordneten ersten Fluidanschluss (1) und der zweite Kegelkolben (67) einen ihm zugeordneten zweiten Fluidanschluss (2) gegen einen dritten Fluidanschluss (3) jeweils leckagefrei abdichten, der an beide Dichtkanten (59, 61) angrenzt, **dadurch gekennzeichnet, dass** das stangenartige Steuerglied (71) einander entgegengesetzte wirksame Kolbenflächen (73, 75) besitzt, von denen die eine mit dem Druck des ersten Fluidanschlusses (1) und die zweite mit dem Druck des zweiten Fluidanschlusses (2) beaufschlagbar ist.

2. Ventilvorrichtung nach Anspruch 1, **dadurch gekennzeichnet, dass** ein positiv überdecktes Ventilkonzept realisiert ist, bei dem während des Schaltens des Ventils nebst zugehöriger Ventilelemente (65, 67) keine Fluidverbindung zwischen mindestens zwei der mindestens drei Fluidanschlüsse (1, 2, 3) besteht.

3. Ventilvorrichtung nach Anspruch 1 oder 2, **dadurch gekennzeichnet, dass** mit den Ventilelementen (65, 67) zumindest die unmittelbar zuordenbaren Fluidanschlüsse (1 und 2) im Betrieb der Vorrichtung bedämpfbar sind.

4. Ventilvorrichtung nach einem der vorstehenden Ansprüche, **dadurch gekennzeichnet, dass** eine eine voneinander unabhängig erfolgende Ansteuerung der Ventilelemente (65, 67) ermöglichende Steuereinrichtung (71) vorgesehen ist.

5. Ventilvorrichtung nach einem der vorstehenden Ansprüche, **dadurch gekennzeichnet, dass** die Steuereinrichtung ein im Ventilgehäuse (51) entlang der Verfahrrichtung der Ventilelemente (65, 67) verschiebbares, stangenartiges Steuerelement (71) aufweist, bei dessen Verschiebung in der einen oder anderen Verfahrrichtung das eine oder das andere Ventilelement (65, 67), unabhängig vom anderen Ventilelement (65, 67), mitnehmbar ist.

6. Ventilvorrichtung nach einem der vorstehenden Ansprüche, **dadurch gekennzeichnet, dass** die Kegelkolben (65, 67) durch je eine Feder (69) in die Schließstellung vorgespannt sind.

7. Ventilvorrichtung nach einem der vorstehenden Ansprüche, **dadurch gekennzeichnet, dass** bei Ausbildung als Standard-Wechselventil die wirksamen Kolbenflächen (73, 75) des stangenartigen Steuergliedes (71) derart mit dem Fluidanschluss (1) bzw. dem Fluidanschluss (2) verbunden sind, dass das stangenartige Steuerglied (71) durch den Druck des den jeweils höheren Druck führenden Fluidanschlusses (1 oder 2) in eine Richtung bewegt wird, in der es den dem Fluidanschluss des höheren Druckes zugehörigen Kegelkolben (65 oder 67) aus der Schließstellung bewegt und den dem Fluidanschluss (1 oder 2) des niedrigeren Druckes zugehörigen Kegelkolben (65 oder 67) in der Schließstellung belässt.

8. Ventilvorrichtung nach einem der vorstehenden Ansprüche, **dadurch gekennzeichnet, dass** bei Ausbildung als inverses Wechselventil (45) die wirksamen Kolbenflächen (73, 75) des stangenartigen Steuerglieds (71) derart mit dem Fluidanschluss (1) bzw. dem Fluidanschluss (2) verbunden sind, dass das stangenartige Steuerglied (71) durch den Druck des den jeweils höheren Druck führenden Fluidanschlusses (1 oder 2) in eine Richtung bewegt wird, in der es den dem Fluidanschluss des niedrigeren Druckes zugehörigen Kegelkolben (65, 67) aus der Schließstellung bewegt und den dem Fluidanschluss (1 oder 2) des höheren Druckes zugehörigen Kegelkolben (65 oder 67) in der Schließstellung belässt.

9. Ventilvorrichtung nach einem der vorstehenden Ansprüche, **dadurch gekennzeichnet, dass** das Steuerglied die Form einer runden Stange (71) besitzt, die beide Kegelkolben (65, 67) in einer eine Relativbewegung zulassenden Weise koaxial durchgreift und zwischen den Kegelkolben (65, 67) eine Mitnehmereinrichtung (79) aufweist, die bei der Bewegung in der einen oder anderen Verfahrrichtung den einen oder anderen Kegelkolben (65 oder 67) aus der Schließstellung heraus mitnimmt.

10. Ventilvorrichtung nach einem der vorstehenden Ansprüche, **dadurch gekennzeichnet, dass** von den endseitigen Kolbenflächen (73, 75) ausgehende, entlang der Verfahrachse verlaufende Bohrungen (83, 87, 89) in der Stange (71) Kanäle für die Fluidverbindung der Kolbenflächen (73, 75) mit einem jeweils zugehörigen Fluidanschluss (1 oder 2) bilden.

11. Ventilvorrichtung nach einem der vorstehenden Ansprüche, **dadurch gekennzeichnet, dass** für die Mitnahme der Kegelkolben (65, 67) durch das stangenartige Steuerglied (71) ein vorgegebener Leerhub des Steuergliedes (71) vorgegeben ist.

12. Ventilvorrichtung nach einem der vorstehenden Ansprüche, **dadurch gekennzeichnet, dass** die wirksamen Kolbenflächen (73, 75) des stangenartigen Steuergliedes (71) unterschiedlich große wirksame Flächengrößen besitzen.

13. Ventilvorrichtung nach einem der vorstehenden Ansprüche, **dadurch gekennzeichnet, dass** jeder Kegelkolben (65, 67) eine Kolbenfläche aufweist, die bei Beaufschlagung mit dem Druck des jeweils zugehörigen Fluidanschlusses (1 oder 2) die am Kegelkolben (65, 67) wirkende Federkraft verstärkt.

## Claims

1. A valve device, in particular an unlockable double check valve, preferably in the manner of a two-way valve, with
- at least three fluid connections (1, 2, 3) provided to a valve housing (51);
- at least two valve elements (65, 67) which can be displaced in the valve housing (51), and with
- at least one control device (71) for controlling the respective valve elements (65, 67),
wherein at least one of the valve elements (65, 67) forms, with parts (59/61) of the valve housing (51), a seat leak-tight closure part for the assigned fluid connections (1, 2, 3), wherein the valve elements in the form of conical pistons (65, 67) are provided with a conical sealing surface (63) which, in cooperation with an assigned sealing edge (59, 61) of the valve housing (51), forms a seat leak-tight closure, and wherein each of the conical pistons (65, 67) is pretensioned in a closed position by an energy storage means (69), in which closed position the first conical piston (65) seals a first fluid connection (1) assigned thereto and the second conical piston (67) seals a second fluid connection (2) assigned thereto, each in a leak-free manner, against a third fluid connection (3), which adjoins both sealing edges (59, 61), **characterised in that** the rod-like control element (71) has piston surfaces (73, 75) which are effective in opposition to one another, to one of which the pressure of the first fluid connection (1) and to the second of which the pressure of the second fluid connection (2) can be applied.

2. The valve device according to claim 1, **characterised in that** a positively overlapped valve concept is implemented in which, during the switching of the valve together with associated valve elements (65, 67), no fluid connection exists between at least two of the at least three fluid connections (1, 2, 3).

3. The valve device according to claim 1 or 2, **characterised in that** at least the directly assignable fluid connections (1 and 2) can be damped with the valve elements (65, 67) during operation of the device.

4. The valve device according to one of the preceding claims, **characterised in that** a control device (71) is provided which allows the valve elements (65, 67) to be controlled independently of one another.

5. The valve device according to one of the preceding claims, **characterised in that** the control device has a rod-like control element (71) which is displaceable, along the direction of travel of the valve elements (65, 67), in the valve housing (51) during the displacement of which in the one or other direction of travel, the one or the other valve element (65, 67) can be carried along, independently of the other valve element (65, 67).

6. The valve device according to one of the preceding claims, **characterised in that** each of the conical pistons (65, 67) is pretensioned in closed position by a spring (69).

7. The valve device according to one of the preceding claims, **characterised in that**, when designed as a standard two-way valve, the effective piston surfaces (73, 75) of the rod-like control element (71) are connected to the fluid connection (1) or the fluid connection (2) such that the rod-like control element (71) is moved, by the pressure of the fluid connection (1 or 2) conveying the respective higher pressure, in a direction in which it moves the conical piston (65 or 67) associated with the fluid connection of higher pressure out of the closed position and leaves the conical piston (65 or 67) associated with the fluid connection (1 or 2) of the lower pressure in the closed position.

8. The valve device according to one of the preceding claims, **characterised in that**, when designed as a reverse two-way valve (45), the effective piston surfaces (73, 75) of the rod-like control element (71) are connected to the fluid connection (1) or the fluid connection (2) such that the rod-like control element (71) is moved, by the pressure of the fluid connection (1 or 2) conveying the respective higher pressure, in a direction in which it moves the conical piston (65, 67) associated with the fluid connection of the lower pressure out of the closed position and leaves the conical piston (65 or 67) associated with the fluid connection (1 or 2) of the higher pressure in the closed position.

9. The valve device according to one of the preceding claims, **characterised in that** the control element has the form of a round rod (71), which engages both conical pistons (65, 67) coaxially in a manner allowing a relative movement and which has a carrying device (79) between the conical pistons (65, 67) which, during the movement in the one or the other direction of displacement, takes the one or the other conical piston (65 or 67) out of the closed position and carries it along therewith.

10. The valve device according to one of the preceding claims, **characterised in that** bore holes (83, 87, 89), starting from the end-side piston surfaces (73, 75) and extending along the displacement axis in the rod (71), form ducts for the fluid connection of the piston surfaces (73, 75) to a respective associated fluid connection (1 or 2).

11. The valve device according to one of the preceding claims, **characterised in that** a predefined idle stroke of the control element (71) is provided for the rod-like control element (71) to carry along the conical pistons (65, 67).

12. The valve device according to one of the preceding claims, **characterised in that** the effective piston surfaces (73, 75) of the rod-like control element (71) have effective areas of different sizes.

13. The valve device according to one of the preceding claims, **characterised in that** each conical piston (65, 67) has a piston surface which, when the pressure of the respective associated fluid connection (1 or 2) is applied thereto, increases the spring force acting on the conical piston (65, 67).

## Revendications

1. Dispositif de soupape, notamment double clapet antiretour piloté, de préférence à la façon d'une soupape à deux voies, comprenant
- au moins trois raccords (1, 2, 3) pour du fluide prévus sur un corps (51) de la soupape ;
- au moins deux obturateurs (65, 67) de soupape pouvant être déplacés dans le corps (51) de la soupape ainsi que comprenant
- au moins un dispositif (71) de commande pour commander les obturateurs (65, 67) de la soupape,
dans lequel au moins l'un des obturateurs (65, 67) de soupape forme, avec des parties (59/61) du corps (51) de la soupape, une partie de fermeture étanche comme un siège, pour les raccords (1, 2, 3) pour du fluide associés, les obturateurs étant prévus sous la forme de pistons (65, 67) coniques ayant une surface (63) d'étanchéité conique, qui, en coopération avec un bord (59, 61) d'étanchéité associé du corps (51) de la soupape, forment une fermeture étanche comme un siège et dans lequel les pistons (65, 67) coniques sont précontraints chacun par un accumulateur (69) d'énergie dans une position de fermeture, dans laquelle le premier piston (65) conique rend étanche, sans fuite, un premier raccord (1) pour du fluide, qui lui est associé, et le deuxième piston (67) conique, un deuxième raccord (2) pour du fluide, qui lui est associé, par rapport respectivement à un troisième raccord (3) pour du fluide, qui est voisin de deux bords (59, 61) d'étanchéité, **caractérisé en ce que** l'organe (71) de commande de type à tige possède deux surfaces (73, 75) de piston agissant en sens opposé, dont l'une peut être soumise à la pression du premier raccord (1) pour du fluide, tandis que la deuxième peut être soumise à la pression du deuxième raccord (2) pour du fluide.

2. Dispositif de soupape suivant la revendication 1, **caractérisé en ce qu'**un concept de soupape à recouvrement positif est réalisé, dans lequel, pendant la commutation de la soupape, outre des obturateurs (65, 67) associés, il n'y a pas de liaison de fluide entre au moins deux des au moins trois raccords (1, 2, 3) pour du fluide.

3. Dispositif de soupape suivant la revendication 1 ou 2, **caractérisé en ce que**, par les obturateurs (65, 67), au moins les raccords (1 et 2) pour du fluide, pouvant être associés directement, peuvent être amortis en fonctionnement du dispositif.

4. Dispositif de soupape suivant l'une des revendications précédentes, **caractérisé en ce qu'**il est prévu un dispositif (71) de commande permettant une commande des obturateurs (65, 67) indépendamment l'un de l'autre.

5. Dispositif de soupape suivant l'une des revendications précédentes, **caractérisé en ce que** le dispositif de commande a un élément (71) de commande de type à tige pouvant coulisser dans le corps (51) de la soupape suivant le sens de déplacement des obturateurs (65, 67), élément (71) qui, dans l'une ou l'autre des sens de déplacement, peut entraîner l'un ou l'autre obturateur (65, 67), indépendamment de l'autre obturateur (65, 67).

6. Dispositif de soupape suivant l'une des revendications précédentes, **caractérisé en ce que** les pistons (65, 67) coniques sont précontraints dans la position de fermeture par respectivement un ressort (69).

7. Dispositif de soupape suivant l'une des revendications précédentes, **caractérisé en ce que**, lorsqu'il est constitué d'une soupape à deux voies normalisées, les surfaces (73, 75) de piston efficaces de l'organe (71) de commande de type à tige sont reliées au raccord (1) pour du fluide ou au raccord (2) pour du fluide, de manière à ce que l'organe (71) de commande de type à tige soit déplacé par la pression du raccord (1 ou 2) pour du fluide, donnant une pression respectivement plus haute dans un sens dans lequel il déplace, hors de la position de fermeture, le piston (65 ou 67) conique associé au raccord pour du fluide ayant la pression la plus haute et laisse dans la position de fermeture le piston (65 ou 67) conique associé au raccord (1 ou 2) pour du fluide ayant la pression la plus basse.

8. Dispositif de soupape suivant l'une des revendications précédentes, **caractérisé en ce que**, lorsqu'il est constitué en soupape (45) à deux voies inverses, les surfaces (73, 75) de piston efficaces de l'organe (71) de commande de type à tige sont reliées au raccord (1) pour du fluide ou au raccord (2) pour du fluide, de manière à déplacer l'organe (71) de commande de type à tige par la pression du raccord (1 ou 2) pour du fluide donnant la pression la plus haute dans un sens dans lequel il déplace, hors de la position de fermeture, le piston (65, 67) conique associé au raccord pour du fluide ayant la pression la plus basse et laisse dans la position de fermeture le piston (65 ou 67) conique associé au raccord (1 ou 2) pour du fluide ayant la pression la plus haute.

9. Dispositif de soupape suivant l'une des revendications précédentes, **caractérisé en ce que** l'organe de commande a la forme d'une tige de section circulaire, traverse coaxialement les deux pistons (65, 67) coniques d'une façon autorisant un mouvement relatif et a, entre les pistons (65, 67) coniques, un dispositif (79) d'entraîneur qui, lors du déplacement dans un sens de déplacement ou dans l'autre sens de déplacement, entraîne, hors de la position de fermeture, l'un ou l'autre piston (65 ou 67) conique.

10. Dispositif de soupape suivant l'une des revendications précédentes, **caractérisé en ce que** des trous (83, 87, 89), partant des surfaces (73, 75) de piston du côté de l'extrémité et s'étendant suivant l'axe de déplacement, forment, dans la tige (71), des canaux pour la liaison fluidique des surfaces (73, 75) de piston à un raccord (1 ou 2) pour du fluide associé respectivement.

11. Dispositif de soupape suivant l'une des revendications précédentes, **caractérisé en ce que**, pour l'entraînement des pistons (65, 67) coniques par l'organe (71) de commande de type à tige, est prévue une course à vide donnée à l'avance de l'organe (71) de commande.

12. Dispositif de soupape suivant l'une des revendications précédentes, **caractérisé en ce que** les surfaces (73, 75) de piston efficaces de l'organe (71) de commande de type à tige ont des dimensions de surface efficace différentes.

13. Dispositif de soupape suivant l'une des revendications précédentes, **caractérisé en ce que** chaque piston (65, 67) conique a une surface de piston qui, lorsqu'elle est soumise à la pression du raccord (1 ou 2) pour du fluide associé respectivement, renforce la force de ressort agissant sur le piston (65, 67) conique.
